Europäisches Patentamt

(19) European Patent Office

Office européen des brevets

(11) Numéro de publication: **0 039 955**
**A1**

(12) **DEMANDE DE BREVET EUROPEEN**

(21) Numéro de dépôt: **81103681.3**

(22) Date de dépôt: **13.05.81**

(51) Int. Cl.³: **F 16 H 5/12**

(30) Priorité: **14.05.80 FR 8010952**

(43) Date de publication de la demande:
**18.11.81 Bulletin 81/46**

(84) Etats contractants désignés:
**BE DE GB IT**

(71) Demandeur: **RENAULT VEHICULES INDUSTRIELS**
**Société Anonyme dite:**
**129 rue Servient "La Part Dieu"**
**F-69003 Lyon(FR)**

(72) Inventeur: **Lagrange, Henri**
**14 Parc du Château**
**F-78430 Louveciennes(FR)**

(72) Inventeur: **Fourtane, Michel**
**15-17 rue de Sèvres**
**F-92100 Boulogne-Billancourt(FR)**

(74) Mandataire: **Casalonga, Alain et al,**
**Bureau D.A. Casalonga Office Josse & Petit Lilienstrasse**
**77**
**D-8000 München 80(DE)**

(54) Dispositif de commande de vitesses hydro-pneumatiques.

㊳ Dispositif de commande des vitesses sur un véhicule automobile du type comportant un levier manuel à double mouvement de sélection et de passage des vitesses, et une boîte mécanique avec arbre de commande à double mouvement de translation et de rotation respectivement pour la sélection et le passage des vitesses, avec un moyen de liaison assurant la transmission des deux mouvements entre le levier et l'arbre de commande, caractérisé par le fait que la transmission dans le sens (y, Y) du passage des vitesses est assurée par une liaison hydraulique directe double et symétrique (8, 9, 11, 13) et que la transmission dans le sens (x, X) de la sélection est assurée par une commande pneumatique numérique à l'aide d'un distributeur multiple (21) à codage binaire alimentant par plusieurs canalisations (37, 38) un vérin multiple (44, 46, 49) formé de plusieurs sections qui sont alimentées respectivement par ces canalisations, qui ont des courses multiples et qui agissent mécaniquement en série.

./...

Croydon Printing Company Ltd.

FIG.1

## Dispositif de commande de vitesses hydro-pneumatiques.

L'invention concerne la commande des vitesses pour les véhicules automobiles à boîte mécanique, en particulier dans le cas où la boîte de vitesses est très éloignée de la commande manuelle comme par exemple dans le cas des autocars à moteur arrière.

Actuellement, la commande manuelle à distance des boîtes de vitesses est effectuée en interposant entre le levier de commande manuelle et la boîte tout un ensemble de timoneries composé de tubes de liaison, de cardans et de paliers de guidage, le tout réparti sur une longueur assez importante de l'ordre de 10 m.

Cet ensemble présente de gros inconvénients, notamment dû au fait que les tubes de liaison, qui travaillent en torsion et en compression, doivent avoir un diamètre assez important conditionné par le moment de torsion appliqué lors de la sélection des vitesses, ce qui conduit à une commande lourde et difficile à manoeuvrer. D'autre part, un fonctionnement correct exige un positionnement précis des paliers de guidage ce qui rend donc très difficile l'installation, le réglage et l'entretien, ainsi que le graissage de l'ensemble de paliers peu accessibles. Enfin, même dans les meilleures conditions le rendement de la commande est rarement exempt de frottements ou de jeux.

On connaît également des dispositifs de commande à distance opérant par pression de fluide, avec ou sans alimentation sous pression, mais ces dispositifs sont onéreux, encombrant et en général non sensitifs dans le sens du passage des vitesses.

Le but de l'invention est d'éliminer les inconvénients précédents en réalisant un dispositif de commande à distance qui soit simple, précis dans le sens de la sélection des vitesses et sensitif dans le sens du passage des vitesses, et qui soit d'une installation facile sans nécessiter aucun réglage ni entretien.

L'invention consiste à transmettre séparément, entre le levier de commande manuelle et l'organe d'entrée de la boîte de vitesses, les mouvements de passage des vitesses et de sélection des vitesses, et à utiliser pour le mouvement de passage des vitesses une transmission hydraulique directe double et symétrique, et pour la transmission du mouvement de sélection une transmission à commande par air comprimé avec alimentation en air, distributeur multiple et vérin multiple fonctionnant d'une manière numérique avec codage binaire. En particulier, le distributeur peut être un distributeur double à quatre positions relié seulement par deux canalisations d'air à un vérin à deux sections simple effet concentriques agissant en série et ayant des courses simple et double.

D'autres particularités de l'invention apparaîtront dans la description qui va suivre d'un mode de réalisation pris comme exemple et représenté sur le dessin annexé, sur lequel :

la fig. 1 est une vue d'ensemble du dispositif côté levier manuel avec coupe axiale du distributeur;

la fig. 2 est une coupe verticale selon II-II de la fig. 1;

les fig. 3, 4, 5 et 6 sont des coupes partielles simplifiées du distributeur de la fig. 1 dans les diverses positions de sélection;

la fig. 7 est une vue en élévation du dispositif côté boîte de vitesses;

la fig. 8 est une vue partielle en coupe du vérin double en position rétractée;

les fig. 9, 10 et 11 représentent schématiquement les trois autres positions d'extension de ce vérin;

la fig. 12 représente une coupe horizontale partielle selon XII-XII de la fig. 7.

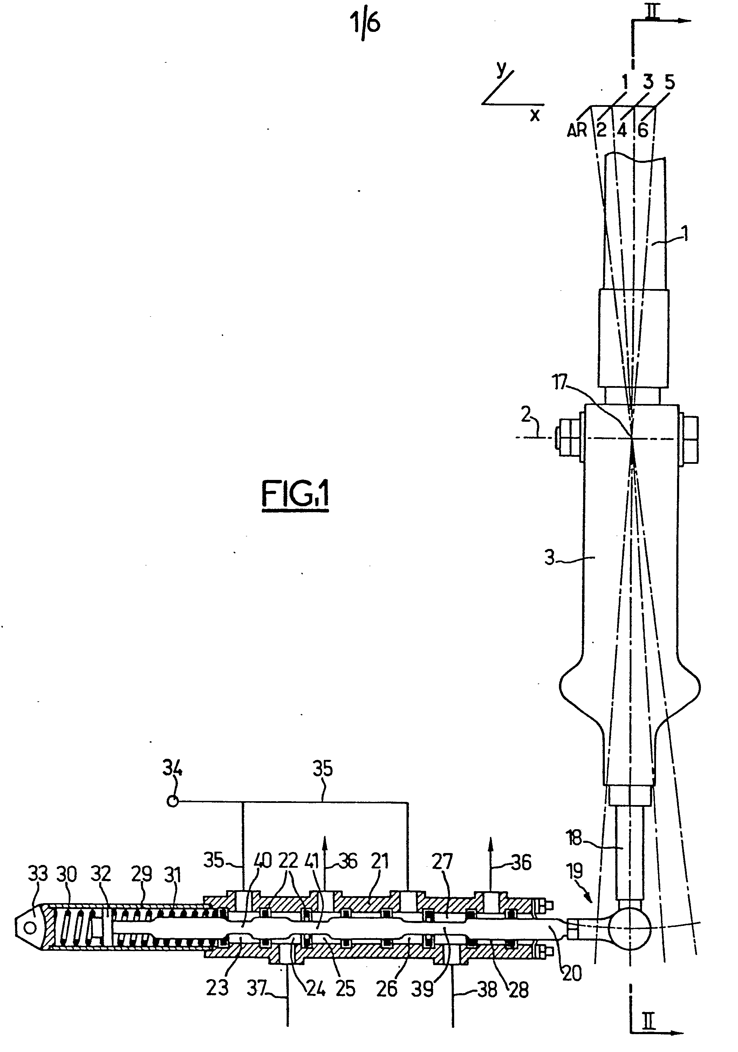

Sur la fig. 1 on a représenté en 1 la base du levier de vitesses dont l'extrémité supérieure non représentée comporte la poignée habituelle actionnée par la main du conducteur. Au-dessus de cette base 1 on a représenté d'une manière classique conventionnelle la grille des vitesses dans le cas de six vitesses plus marche arrière. Le levier 1 est donc manoeuvré d'une manière habituelle selon un double mouvement :
le mouvement dans le sens x, habituellement de gauche à droite,
ainsi naturellement que le mouvement inverse, et qui correspondent à la sélection des vitesses, et le mouvement dans le
sens y, habituellement d'arrière en avant, ainsi que le mouvement inverse, et qui correspondent au passage des vitesses.

La base du levier 1 est articulée autour d'un axe 2,
parallèle à x dans un carter 3, de manière qu'un prolongement
inférieur 4 du levier 1 actionne, par l'intermédiaire d'une
rotule 5 coulissant dans un alésage vertical 6, la tige commune 7 de deux pistons 8 coulissant dans deux cylindres 9
solidaires du carter 3 et disposés dans le prolongement l'un
de l'autre.

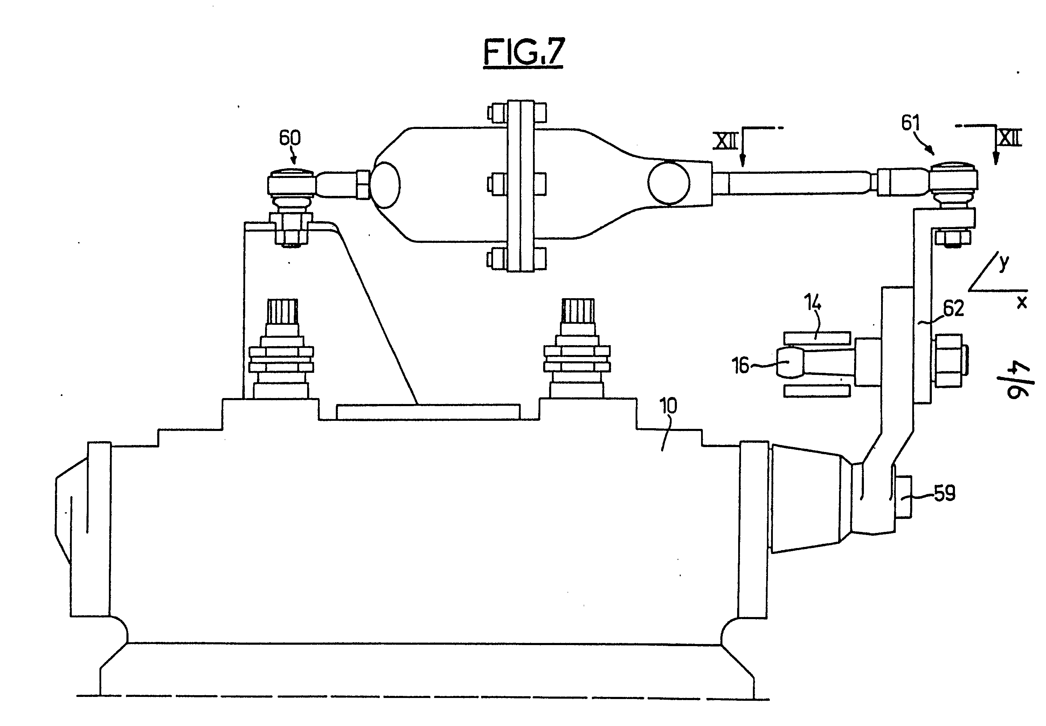

Du côté de la boîte de vitesses 10, comme on le voit sur
les fig. 7 et 12, il est prévu également deux cylindres 11
situés dans le prolongement l'un de l'autre et fixés par un
support 12, non représenté en détail, sur le carter de la
boîte de vitesses 10. Dans ces cylindres coulissent à nouveau
deux pistons 13 réunis par une tige commune 14 dont la partie
centrale comporte une lumière 15 ovalisée verticalement pour
permettre l'entraînement horizontal sans jeu d'une rotule
sphérique 16 dans le sens Y des fig. 7 et 12 tout en tolérant
un léger débattement vertical de cette rotule dans la lumière
15, pour permettre à la rotule 16 d'effectuer un mouvement
circulaire dans le sens Y, et tout en permettant également un
coulissement axial de cette rotule 16 dans le sens X.

Chacun des cylindres 9 est réuni par une canalisation
distincte à un des cylindres 11 et l'ensemble de ces canalisations et des fonds de cylindre est rempli d'huile et purgé
de son air de manière à permettre la transmission directe
sensitive et réversible des mouvements y vers les mouvement Y
avec appréciation manuelle des forces de réaction au passage
des vitesses.

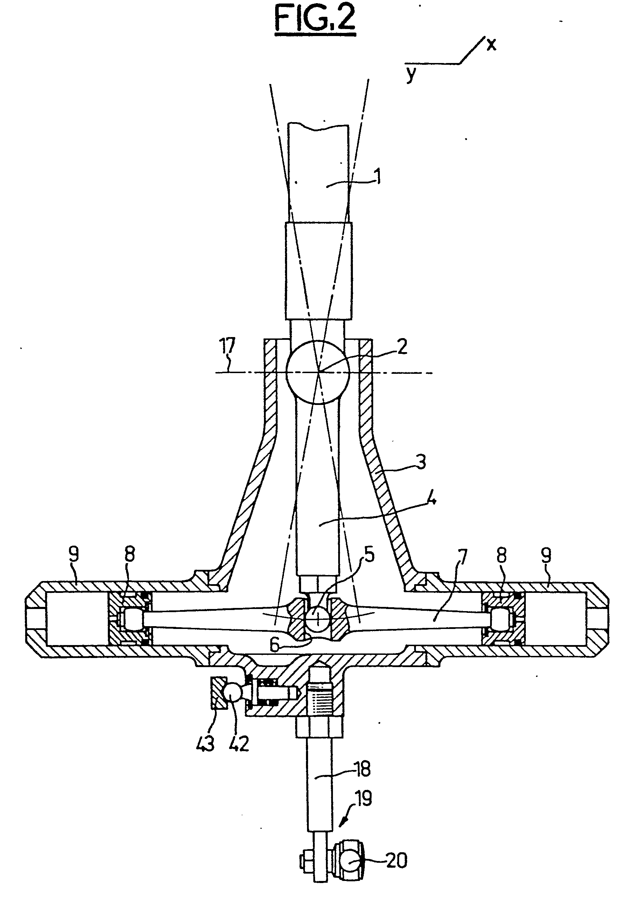

Revenant aux fig. 1 et 2, l'ensemble du levier 1, du
carter 3 et des organes qu'il contient est monté mobile autour
d'un axe 17 parallèle à y, et la base du carter est prolongée
inférieurement par une tige 18 qui s'articule par une rotule 19 à une tige 20. Celle-ci forme le tiroir multiple d'un distributeur multiple 21 dont le corps comporte un alésage pour le passage de la tige 20, avec un certain nombre de gorges pour le logement de joints toriques 22 et divers chambrages annulaires 23, 24, 25, 26, 27 et 28, chacun séparé de l'autre par un joint, excepté les chambrages 25 et 26 qui sont séparés par deux joints avec éventuellement entre eux un chambrage supplémentaire ne jouant aucun rôle particulier.

En réalité pour des questions de facilité d'usinage des gorges et des chambrages, le corps 21 est réalisé par un empilement de plusieurs sections resserrées par des tiges longitudinales.

Du côté extrême gauche de la fig. 1, le distributeur 21 comporte dans une enveloppe 29 une paire de ressorts antagonistes 30 et 31 agissant sur une tête 32 solidaire de l'autre extrémité de la tige 20, de telle manière qu'au repos l'ensemble occupe la position représentée sur la fig. 1. Enfin, l'extrémité de l'enveloppe 29 comporte un embout 33 d'articulation sur un point fixe du châssis.

Une alimentation d'air comprimé 34 est réunie par des canalisations 35 à deux embouts de raccordement du corps 21 débouchant dans les chambrages 23 et 26, tandis qu'au contraire les chambrages 25 et 28 débouchent par des embouts 36 à l'air libre, directement ou par l'intermédiaire de silencieux. Enfin du distributeur partent deux canalisations de liaison 37 et 38 réunies elles aussi à deux embouts débouchant dans les chambrages 24 et 27.

La tige 20 du tiroir distributeur comporte un certain nombre de gorges ou rétrécissements coopérant avec les divers joints et les divers chambrages, avec un profil de raccordement arrondi permettant la pénétration progressive dans les joints sans cisaillement de ceux-ci.

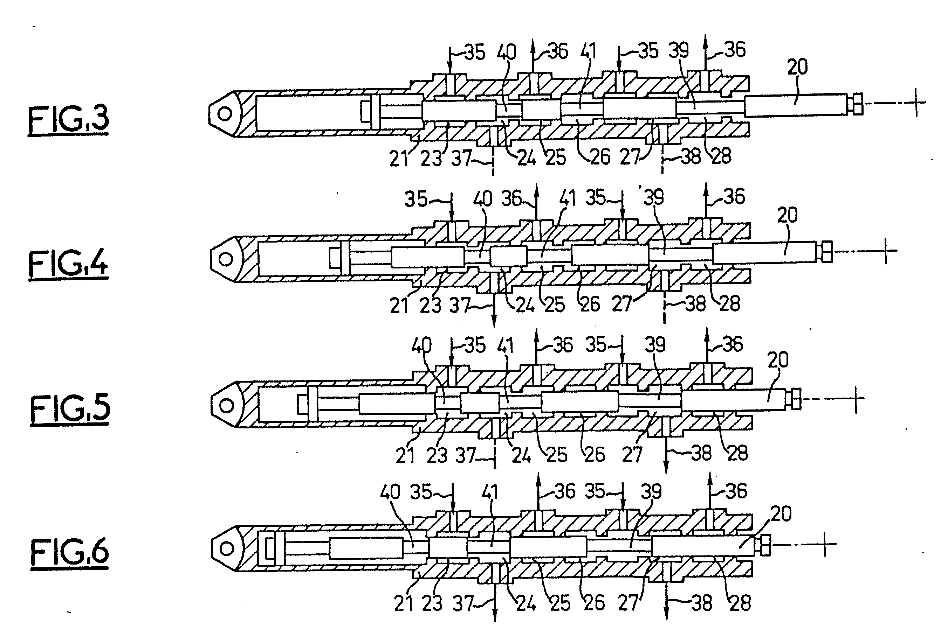

A titre de simplification et de clarification sur les fig. 3 à 6, on n'a pas représenté ni les joints, ni les formes progressives de la tige. On voit en particulier que la tige 20 comporte une première gorge ou rétrécissement 39 de grande dimension axiale coopérant avec les trois chambrages 26, 27 et 28 pour faire communiquer 26 et 27 pour les deux positions les plus à gauche de la tige (fig. 5 et fig. 6) ce qui se traduit par la transmission de la pression d'air 34 dans la canalisation 38, et inversement pour faire communiquer les chambrages 27 et 28 pour les deux positions les plus à droite (fig. 3 et fig. 4) ce qui se traduit par la mise à l'échappement dans ces positions de la canalisation 38. La tige 20 comporte d'autre part deux autres gorges ou rétrécissements 40 et 41 de plus petite dimension axiale coopérant avec les trois chambrages 23, 24 et 25 pour opérer de même la mise à l'échappement de la canalisation 37 par mise en communication des chambrages 24 et 25 (fig. 3 et 5) et la mise en pression de cette canalisation 37 par mise en communication des chambrages 23 et 24 (fig. 4 et 6) mais ceci alternativement à l'aide de la gorge 40 pour les fig. 3 et 4 puis à l'aide de la gorge 41 pour les fig. 5 et 6.

On comprend ainsi que les quatre positions de sélection de la grille des vitesses correspondent respectivement aux quatre combinaisons binaires résultant de la présence ou de l'absence de pression dans les deux canalisations 37 et 38 selon le code représenté sur les fig. 3 à 6 : l'absence complète de pression (fig. 3) correspond à la marche arrière, l'établissement de la pression dans 37 seulement correspond au passage première-deuxième et inversement, l'établissement de la pression dans 38 seulement correspond au passage troisième-quatrième et inversement, enfin, l'établissement de la pression dans les deux canalisations 37 et 38 (fig. 6) correspond au passage cinquième-sixième et inversement.

Pour que les quatre positions de sélection du levier et du distributeur soient nettement établies, on dispose de préférence à la base du carter 3 un doigt élastique 42 coopérant avec une base fixe 43 comportant quatre crantages, en forme de cuvettes coniques par exemple.

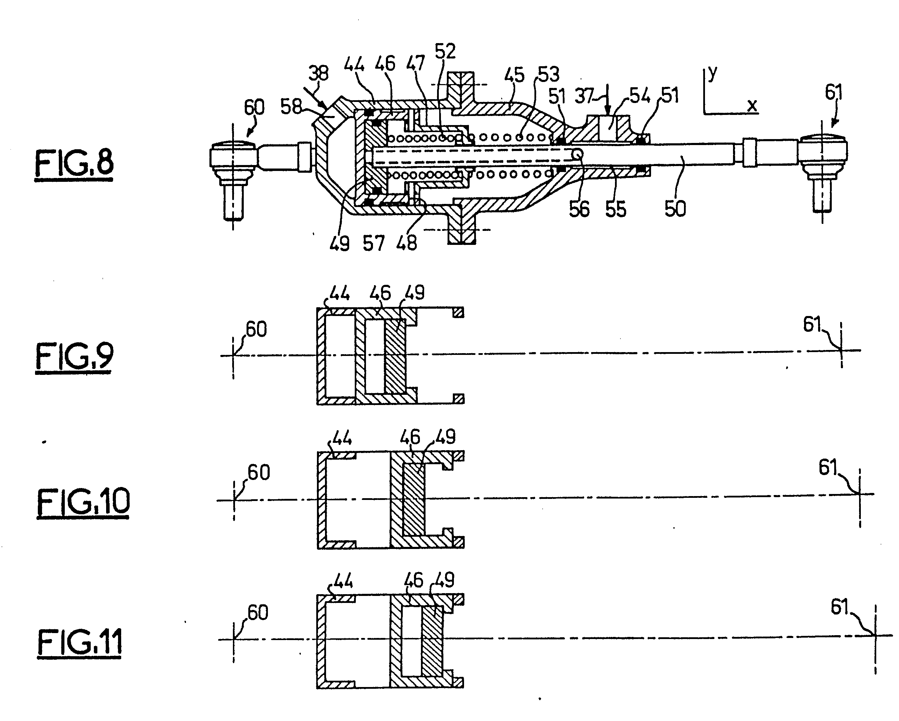

Pour traduire ce code numérique binaire pneumatique du côté de la boîte et retrouver les quatre positions de sélection, on utilise un vérin double à quatre positions représenté en vue extérieure sur la fig. 7 et en coupe sur la fig. 8. Ce vérin comporte un cylindre 44 fermé par un couvercle 45 et dans lequel coulisse un piston formé lui-même par un pot cylindrique 46 fermé par un couvercle 47 auquel il est assemblé au moyen de goupilles 48. Dans le pot 46 coulisse à son tour un piston 49 solidaire d'une tige 50 qui coulisse entre deux joints 51 du couvercle 45.

Les deux sections de vérin agissant en série sont chacune à simple effet et en l'absence de pression, deux ressorts de rappel 52 et 53 rappellent respectivement le piston 49 vers le fond du pot 46 et ce dernier vers le fond du cylindre 44.

La canalisation 37 provenant du distributeur précédent est raccordée par un embout 54 à un chambrage 55 s'étendant entre les deux joints 51 et communiquant la pression d'air éventuelle à un trou 56 percé perpendiculairement à la tige 50 et débouchant dans un passage axial 57 traversant la tige 50 et le piston 49 pour déboucher sur la face extrême de ce piston, entre celui-ci et le fond du pot 46, et ceci pour toutes les positions que peut occuper la tige 50 par rapport au couvercle 45. D'autre part, la canalisation 38 provenant du distributeur précédent est réunie à un embout 58 débouchant dans le fond du cylindre 44.

La course du piston 49 dans le pot 46 correspond à la course nécessaire dans le sens X de l'arbre 59 de commande de boîte pour passer d'une position de sélection à une position voisine, tandis que la course du pot 46 dans le cylindre 44 correspond au double de cette valeur.

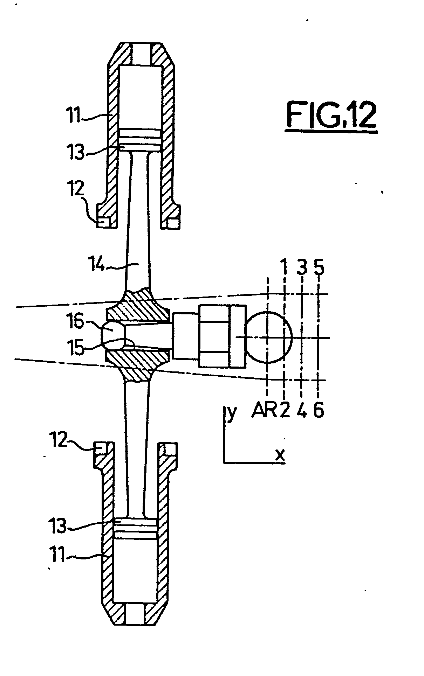

De cette manière il est clair que l'absence de pression dans 37 et 38 (fig. 3) correspond à la position complètement rétractée du vérin (fig. 8) c'est-à-dire à la sélection de la marche arrière. La position première-deuxième, correspondant à la fig. 4, produisant l'alimentation de 37 seul produit le déplacement du piston 49 seul c'est-à-dire la position représentée sur la fig. 9. La position troisième-quatrième correspondant à la fig. 5 et pour laquelle la canalisation 38 est alimentée seule, produit le retour relatif du piston 49 au fond du pot 46 mais le déplacement d'ensemble de celui-ci de la course double comme représenté sur la fig. 10 ce qui donne la position troisième-quatrième. Enfin, la position de la fig. 6 qui correspond à l'alimentation simultanée des canalisations 37 et 38 correspond naturellement à la course maximum du vérin double comme représenté sur la fig. 11 et entraînant la sélection cinquième-sixième.

Il faut remarquer que lorsque le levier 1 est au point mort, et en l'absence d'action manuelle sur ce levier, il se positionne automatiquement sous l'effet des ressorts de rappel 30 et 31 dans la position représentée sur la fig. 1, c'est-à-dire la position troisième-quatrième, et le vérin double se place naturellement dans la position représentée sur la fig. 10, mais ceci seulement si la pression d'air 34 est alimentée. En effet, en cas de panne d'alimentation le vérin revient automatiquement dans la position de marche arrière.

Sur la fig. 7 on voit comment le vérin à quatre positions s'articule sur la rotule fixe 60 pour agir sur la rotule mobile 61 située à l'extrémité d'un levier de commande 62 solidaire de l'arbre de commande 59 de la boîte 10 de manière à déplacer celui-ci dans le sens X. Ce levier 62 comporte lui-même la rotule 16 indiquée précédemment et qui est entraînée dans le sens Y par le dispositif de passage de vitesses décrit.

On voit ainsi que l'invention combine la sensitivité d'une commande hydraulique directe pour le passage des vitesses et la précision d'une commande pneumatique numérique pour la sélection des vitesses, le tout avec des moyens extrêmement simples ne demandant aucune alimentation hydraulique ni aucun dispositif de contrôle de position, l'alimentation en air comprimé étant pratiquement toujours disponible sur les véhicules concernés par l'invention. Enfin, l'ensemble est d'une installation facile, par la simple pose de deux canalisation d'huile et deux canalisations d'air et ne nécessite aucun réglage ni aucun entretien de parties inacessibles.

REVENDICATIONS

1. Dispositif de commande des vitesses sur un véhicule automobile du type comportant un levier manuel à double mouvement de sélection et de passage des vitesses, et une boîte mécanique avec arbre de commande à double mouvement de translation et de rotation respectivement pour la sélection et le passage des vitesses, avec un moyen de liaison assurant la transmission des deux mouvements entre le levier et l'arbre de commande, caractérisé par le fait que la transmission dans le sens (y, Y) du passage des vitesses est assurée par une liaison hydraulique directe double et symétrique (8, 9, 11, 13) et que la transmission dans le sens (x, X) de la sélection est assurée par une commande pneumatique numérique à l'aide d'un distributeur multiple (21) à codage binaire alimentant par plusieurs canalisations (37, 38) un vérin multiple (44, 46, 49) formé de plusieurs sections qui sont alimentées respectivement par ces canalisations, qui ont des courses multiples et qui agissent mécaniquement en série.

2. Commande des vitesses selon la revendication 1, caractérisée par le fait que la grille des vitesses comporte au plus quatre positions de sélection, que le distributeur multiple (21) comporte deux groupes de trois chambrages (23, 24, 25 et 26, 27, 28) réunis respectivement et successivement à l'alimentation en air sous pression (34), à une des canalisations de commande (37, 38) et à l'échappement (36), et coopérant avec un tiroir distributeur (20) comportant deux gorges courtes (40, 41) dans le sens axial coopérant avec le premier groupe de chambrages (23, 24, 25) et une gorge longue (39) dans le sens axial coopérant avec le deuxième groupe de chambrages (26, 27, 28) et que le vérin comporte un piston (49) se déplaçant d'une course sensiblement égale à un pas de sélection dans un cylindre (46) constituant lui-même un piston se déplaçant d'une course double dans un autre cylindre (44), les deux cylindres (46, 44) étant alimentés respectivement et dans toutes les positions par la première (37) et la deuxième (38) canalisation de commande, des ressorts de rappel (52, 53) actionnant séparément chacun des pistons (49, 46) par rapport à son propre cylindre (46, 44) dans le sens de la rétraction.

3. Dispositif de commande des vitesses selon la revendication 2, caractérisé par le fait que la base du levier (1) est montée oscillante autour d'un axe (2) à l'intérieur d'un carter (3) comportant les cylindres (9) de commande hydraulique directe du passage des vitesses, l'ensemble (3, 7, 8, 9) étant lui-même monté mobile autour d'un axe (17) perpendiculaire au précédent et relié par une articulation (19) à la tige (20) du distributeur double (21).

4. Dispositif selon l'une quelconque des revendications précédentes, caractérisé par le fait que le vérin (44) à multiple positions est articulé entre une articulation fixe (60) et une articulation (61) d'extrémité d'un levier (62) solidaire de l'arbre (59) de commande de la boîte, et que le double cylindre hydraulique (11) assurant le passage des vitesses est disposé à poste fixe, la tige commune (14) des deux pistons (13) correspondants étant munie d'une lumière (15) oblongue assurant l'entraînement sans jeu dans le sens du passage des vitesses du levier (62) solidaire de l'arbre de commande (59) par l'intermédiaire d'une rotule (16) portée par celui-ci et susceptible de coulisser dans ladite lumière (15) dans les deux autres directions.

1/6

## FIG.1

0039955

# FIG.2

FIG.3

FIG.4

FIG.5

FIG.6

0039955

# FIG.7

60  61  XII  XII  y  x  14  62  16  10  59  4/6

0039955

FIG.8

FIG.9

FIG.10

FIG.11

0039955

FIG.12

11
13
12
14
16
15
12
13
11

1 3 5
AR 2 4 6

y
x

**0039955**

Numéro de la demande

**))** Office européen
des brevets

**RAPPORT DE RECHERCHE EUROPEENNE**

EP 81 10 3681

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | <u>FR - A - 1 334 809</u> (JOURDAN)<br>* Totalité du brevet * | 1,3 | F 16 H 5/12 |
| | <u>DE - A - 2 036 858</u> (BEECH)<br>* Pages 6,7 et 8; figure 1a * | 1,3 | |
| | <u>DE - B - 1 292 516</u> (TATRA)<br>* Colonnes 2, 3 et 4; figures * | 1,4 | |
| | | | **DOMAINES TECHNIQUES RECHERCHES (Int. Cl.³)** |
| A | <u>DE - B - 1 161 767</u> (KLAVE) | 1 | F 16 H 5/00<br>G 05 G 9/00 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-06-1981 | FLORES |

OEB Form 1503.1  06.78